# EUROPÄISCHE PATENTSCHRIFT

(11) **EP 1 657 144 B1**
(45) Veröffentlichungstag und Bekanntmachung des Hinweises auf die Patenterteilung: **31.12.2008**
(21) Anmeldenummer: 06002288.6
(22) Anmeldetag: 20.02.2002
(51) Int. Cl.: B62D 65/00, B65G 49/04, B62D 65/18

(54) **Verfahren zur Umrüstung einer Vorrichtung zur Behandlung von Werkstücken, insbesondere Fahrzeugkarossen**
Method for retooling a device for the treatment of workpieces, in particular vehicle bodies
Procédé d'adaptation d'un dispositif pour le traitement de pièces, en particulier de carrosseries

(43) Veröffentlichungstag der Anmeldung: 17.05.2006
(62) Teilanmeldung aus: 02806848.4
(73) Patentinhaber: Dürr Systems GmbH, 70435 Stuttgart (DE)
(72) Erfinder: Kreuzer, Bernd, 36341 Lauterbach (DE); Föttinger, Manfred, 35390 Giessen (DE)
(74) Vertreter: HOFFMANN EITLE

(56) Entgegenhaltungen:
- EP-A- 0 030 882
- EP-A- 1 020 347
- DE-A- 2 936 925
- DE-A- 3 906 857
- DE-A- 19 641 048
- GB-A- 2 225 294
- US-A- 4 928 383

## Beschreibung

### Gebiet der Erfindung

Die Erfindung betrifft ein Verfahren zur Umrüstung einer Vorrichtung zur Tauch-Oberflächenbehandlung von Werkstücken, insbesondere Fahrzeugkarossen mit den Merkmalen des Obergriffs des Anspruchs 1.

Eine derartige Anlage Zur Tauch-Oberflächenbehandlung umfasst eine Behandlungsstrecke mit mehreren aufeinanderfolgenden Behandlungsbereichen, in denen die Werkstücke zur Oberflächenbehandlung eingebracht werden.

Ein Behandlungsbereich kann beispielsweise ein Tauchbecken mit einer Behandlungsflüssigkeit sein, doch ist unter dem Begriff Behandlungsbereich auch jede andere Art von Kabine oder Becken zu verstehen, wenn hierin an dem Werkstück eine Behandlung vorgenommen wird. Eine derartige Behandlung kann zum Beispiel auch einen Waschvorgang umfassen. Andere Beispiele für Behandlungen sind eine Tauchphosphatierung, Vorbehandlung für eine Tauchlackierung, Pulverbeschichtung, Nasslackbeschichtung und ähnliches.

### Stand der Technik

Bisher bekannte Vorrichtungen zur Oberflächenbehandlung von Werkstücken wie Fahrzeugkarosserien in Tauchbädern oder Behandlungskabinen werden in kontinuierlich fördernde Vorrichtungen sowie nicht kontinuierlich fördernde Vorrichtungen unterteilt.

Bei kontinuierlich fördernden Anlagen werden die Karosserien in einem Gehänge befestigt und mit einem Kettenantrieb entlang der Behandlungsstrecke gefördert, in die Tauchbäder abgesenkt, durch die Tauchbäder gefördert und wieder aus den Tauchbädern gehoben. Eine kontinuierlich fördernde Anlage zur Oberflächenbehandlung von Fahrzeugkarossen ist in der DE 196 41 048 A1 beschrieben. Bei dieser Vorrichtung werden die Fahrzeugkarossen jeweils von Drehgestellen gehalten, die in festem Abstand zueinander mit gleichbleibender Geschwindigkeit mit Hilfe einer gemeinsamen Fördereinrichtung oberhalb mehrerer Behandlungsbecken verfahren werden. Das Ein- und Ausbringen der Fahrzeugkarossen in bzw. aus den Tauchbädern erfolgt durch eine gezielte Drehbewegung, die über Leitschienen mit der Translationsbewegung der Drehgestelle starr gekoppelt sein kann. Die Drehgestelle werden durch ein umlaufendes Kettensystem geführt und somit sowohl im Bereich der Behandlungsstrecke über den Tauchbädern wie auch beim Rücktransport starr zueinander und mit kontinuierlicher Geschwindigkeit geführt.

In der Technik sind auch nicht-kontinuierlich fördernde Anlagen bekannt, die als Taktanlagen bezeichnet werden. Bei Taktanlagen werden die Fahrzeugkarossen auf Objektträgern über die Tauchbecken gefahren, dort gestoppt und mit Hilfe von Hebevorrichtungen, wie beispielsweise über Hebeanlagen oder Drehvorrichtungen, in das Behandlungsbad eingetaucht und nach der Prozesszeit wieder herausgehoben bzw. herausgedreht. Ein Beispiel für eine derartige Anlage ist die DE 43 04 145 C1 oder aber die DE-U-200 22 634.7.

Die Wahl zwischen einer kontinuierlich fördernden Vorrichtung und einer nicht kontinuierlich fördernden Vorrichtung muss unter Berücksichtigung der spezifischen Vor- und Nachteile beider Grundkonzepte getroffen werden. So sind die kontinuierlich fördernden Vorrichtung zuverlässiger, da die Anlage mit wenigen Antriebsmotoren läuft, während die individuell getakteten Objektträger von Taktanlagen durch mehrere einzeln gesteuerte Motoren eine erhöhte Ausfallwahrscheinlichkeit besitzen. Auch ist der maximale Durchsatz von Werkstücken pro Zeiteinheit bei den kontinuierlichen Vorrichtungen höher als bei den Taktanlagen. Der Vorteil der Taktanlagen liegt hingegen in der hohen Flexibilität der Werkstückbehandlung durch die Möglichkeit der Einzelansteuerung der einzelnen Objektträger.

Im Automobilsektor ist man bestrebt, die Anlagen mit hohen Durchsätzen zu betreiben. Gleichzeitig ist aber auch eine hohe Flexibilität des Prozesses erwünscht, da eine einmal in einem Automobilwerk aufgebaute Anlage möglicherweise in der Zukunft unterschiedliche Aufgaben der Werkstückbehandlung leisten soll.

### Darstellung der Erfindung

Der Erfindung liegt die Aufgabe zugrunde ein verfahren zur Umrüstung einer Vorrichtung zur Tauch-Oberfächenbehandlung von Werkstücken, insbesondere von Fahrzeugkarossen, zu entwickeln, welches zur einer Vorrichtung führt, welche die Vorteile eines hohen Durchsatzes mit dem Vorteil hoher Flexibilisierung vereint.

Diese Aufgabe wird durch ein Verfahren mit den Merkmalen des Anspruchs 1 gelöst. Vorteilhafte Ausführungsformen des erfindungsgemäßen Verfahrens finden sich in den übrigen Ansprüchen.

Der Erfindung liegt der Gedanke zugrunde, eine Vorrichtung zur Behandlung von Werkstücken, insbesondere Fahrzeugkarossen, in Modulbauweise auszugestalten. Ein erstes Modul umfasst eine Behandlungsstrecke mit einem oder mehreren Behandlungsbereichen, wie z.B. Tauchbädern, zur Oberflächenbehandlung der Werkstücke und eine Führungseinrichtung entlang der Behandlungsstrecke. Ein zweites Modul umfasst mehrere Fahrwerke, an denen die Werkstücke befestigbar sind und die entlang der Führungseinrichtung, d.h. entlang der Behandlungsstrecke, bewegbar sind.

Der Kern der Erfindung liegt darin, dass verschiedene Typen von zweiten Modulen jeweils mit dem ersten Modul kombinierbar sind. So können Fahrwerke in der Vorrichtung eingesetzt werden, die selbst keine Antriebsmotoren besitzen und im wesentlichen in form der oben beschriebenen kontinuierlichen Vorrichtungen durch die Vorrichtung zwangsgeführt werden. Andererseits können aber auch Fahrwerke in der Vorrichtung eingesetzt werden, die einen eigenen Fahrantrieb und für die Bewegung der Werkstücke in die Tauchbäder, innerhalb der Tauchbäder und aus den Tauchbädern heraus auch gesonderte Drehantriebe aufweisen. Diese Fahrwerke in Kombination mit dem gleichbleibenden ersten Modul gewährleisten die Eigenschaften von Taktanlagen. Neben den beiden genannten Fahrwerken ähnlich den Haltegestellen bei kontinuierlich fördernden Anlagen und den Objektträgern von Taktanlagen sind aber auch Zwischenlösungen denkbar, die im folgenden als Hybridlösungen bezeichnet werden. So ist es beispielsweise denkbar, Fahrwerke in der Vorrichtung einzusetzen, die keinen eigenen Fahrantrieb besitzen und daher entlang der Behandlungsstrecke zwangsgeführt werden, wohingegen die Fahrwerke einen gesonderten Drehantrieb aufweisen und daher eine individuelle Steuerung der Drehbewegung bis hin zum "Überspringen" einzelner Behandlungsbereiche möglich ist. In umgekehrter Weise kann die Vorrichtung nach dem erfindungsgemäßen Verfahren auch mit Fahrwerken bestückt werden, die jeweils einen eigenen Fahrantrieb besitzen, bei denen aber die Drehbewegung wie bei der oben beschriebenen kontinuierlich fördernden Anlage nach DE 196 41 048 A1 an die Translationsbewegung der Fahrwerke zwangsgekoppelt ist. Derartige Hybrid-Lösungen liegen somit zwischen den oben beschriebenen Grundkonzepten einer kontinuierlich fördernden Vorrichtung und einer Taktanlage.

Für den Betreiber der Vorrichtung besteht somit die Möglichkeit, die gesamte Anlage mit geringem Aufwand zwischen einer kontinuierlich fördernden Anlage, einer Taktanlage und einer obengenannten Hybrid-Lösung umzurüsten. So kann beispielsweise bei der Verwendung der Vorrichtung zur Lackierung von Fahrzeugkarossen die Anlage kontinuierlich fördernd betrieben werden, solange ein maximaler Durchsatz bei hohen Stückzahlen erwünscht ist, während bei einer Verringerung der Produktionsmenge oder beim Auslaufen des entsprechenden Modells die Vorrichtung zu einer Taktanlage umgerüstet werden kann, indem lediglich ein unterschiedliches zweites Modul mit dem ersten, gleichbleibenden Grundmodul kombiniert wird.

Ein weiterer Vorteil der erfindungsgemäß umgerüsteten Vorrichtung liegt darin, dass sich im Rahmen einer Kleinserienfertigung durch die weitgehende Verwendung gemeinsamer Bauteile zwischen unterschiedlich konfigurierten Vorrichtungen die Herstellkosten verringern lassen.

Um eine wie oben beschriebene, flexible Lösung verwirklichen zu können, können die Fahrwerke nicht in der gesamten Anlage an einer umlaufenden Kette geführt werden, da dies dem Grundkonzept der taktenden Anlage sowie der Hybrid-Lösung mit eigenem Fahrantrieb widersprechen würde. Aus diesem Grund müssen die Fahrwerke so geführt werden, dass sie nur bei Bedarf im Bereich der Behandlungsstrecke gleichsam als starre Einheit zueinander geführt werden. Das Verfahren zur Behandlung von Werkstücken, insbesondere Fahrzeugkarossen, zeichnet sich somit dadurch aus, dass die Werkstücke zunächst durch eine erste Fördereinrichtung zu einer ersten Übergabestation antransportiert werden, in der die Werkstücke mit den Fahrwerken verbunden werden. Hierzu wird ein Fahrwerk um eine Schwenkachse hochgeschwenkt, bis das Fahrwerk das Werkstück hält. Anschließend durchfährt das auf dem Fahrwerk gehaltene Werkstück die Behandlungsstrecke bis zu einer zweiten Übergabestation am Ende der Behandlungsstrecke, wobei eine zusätzliche, abschnittsweise Drehbewegung zum Ein- bzw. Ausbringen des Werkstückes in bzw. aus einem oder mehreren Behandlungsbereichen erfolgt. Nachdem das Werkstück die zweite Übergabestation erreicht hat, schwenkt das Fahrwerk um die Schwenkachse herunter und erfolgt gleichzeitig der Abtransport des Werkstückes durch eine zweite Fördereinrichtung. Die um etwa 90° aus der waagerechten verschwenkten Fahrwerke werden zur ersten Übertragungsstation zurücktransportiert.

Die Führungseinrichtung ist nur auf einer Seite der Behandlungsstrecke angeordnet. Durch diese Maßnahme wird der für eine mögliche Wartung zugänglich zu machende Teil der Vorrichtung zusammengefasst und zudem Platz eingespart. Bei einer Konfigurierung der gesamten Vorrichtung hin zu einer kontinuierlich fördernden Anlage lassen sich zudem die Drehwellen zum in Drehung versetzen der Werkstücke kürzer ausbilden, da diese nur noch auf einer Seite der Fahrwerke angeordnet werden müssen.

Vorzugsweise weisen die Fahrwerke Rollen auf, die an der mindestens einen Schiene der Führungseinrichtung abrollen und gleichzeitig die Lage der Fahrwerke relativ zu den Schienen genau festlegen.

Nach einer bevorzugten Ausführungsform der Erfindung umfasst das erste Modul weiterhin eine Rückführeinrichtung, vorzugsweise in Form eines Gurtförderers oder Kettenförderers, zur Förderung der Fahrwerke von der zweiten Übergabestation zur ersten Übergabestation. Der Einsatz eines Gurtförderers stellt ein einfaches Konzept mit einer reibschlüssigen Aufnahme der Fahrwerke dar. Gurtförderer oder Kettenförderer erlauben die Rückführung der Fahrwerke in einer beliebigen Lage und mit einer Geschwindigkeit unabhängig von der durchschnittlichen Geschwindigkeit der Fahrwerke im Bereich der Behandlungsstrecke. Indem ein unabhängiges Rückführorgan vorgesehen ist, lässt sich die Flexibilität der gesamten Vorrichtung weiter erhöhen, und es lässt sich die Rückführeinrichtung als Puffer für Fahrwerke einsetzen.

Wenn die Rückführeinrichtung so abgestimmt ist, dass die Fahrwerke in kürzerer Zeitdauer von der zweiten Übergabestation zur ersten Übergabestation gefördert werden als die Fahrwerke von der ersten Übergabestation zur zweiten Übergabestation gefördert werden, müssen weniger Fahrwerke für eine Gesamtanlage eingesetzt werden. Im Falle von Fahrwerken, die einen eigenen Fahrantrieb besitzen, ist keine Fördereinrichtung im Bereich der Rückführung nötig, weil diese Fahrwerke selbstständig fahren. Durch die schnelle Rückführung müssen bei gleichbleibendem Durchsatz an zu behandelnden Werkstücken weniger Fahrwerke in der Vorrichtung eingesetzt werden, weil die Verweilzeit im Rücktransportbereich geringer ist.

Wie oben bereits im Zusammenhang mit dem Verfahren zum Betrieb der Vorrichtung beschrieben wurde, ist die Vorrichtung bevorzugt so ausgestaltet, dass in der zweiten Übergabestation die Fahrwerke um eine Schwenkachse im Bereich der Führungseinrichtung um einen Winkel von etwa 90° verschwenkt werden und in der ersten Übergabestation die Fahrwerke in entgegengesetzter Schwenkrichtung um denselben Winkelbetrag zurückgeschwenkt werden. Diese Lösung weist den Vorteil auf, dass die Fahrwerke im Rahmen des Rücktransports nur einen geringen Platz in der Gesamtvorrichtung einnehmen. Dies rührt daher, weil die Fahrwerke neben den Behandlungsbädern hochkant zurücktransportiert werden können.

Je nach der Konfiguration der Anlage kann allerdings auch der Rücktransport der Fahrwerke hochkant oberhalb der Behandlungsstrecke erfolgen. Dies ist dann anzustreben, wenn die zu behandelnden Werkstücke, die von der ersten Fördereinrichtung zur ersten Übergabestation transportiert werden, von oben durch die Fahrwerke gegriffen werden sollen. Dann empfiehlt es sich, die Fahrwerke im Bereich der zweiten Übergabestation von den behandelnden Werkstücken nach oben zu verschwenken und entsprechend den Bereich der ersten Übergabestation nach unten an die zu behandelnden Werkstücke wieder heranzuführen. Bevorzugt erfolgt allerdings die Bewegung in genau umgekehrter Richtung. Die Fahrwerke werden im Bereich der zweiten Übergabestation gleichsam unter den Werkstücken weggeklappt, um etwa 90° um die Schwenkachse im Bereich der Führungseinrichtung verschwenkt, mit erhöhter Geschwindigkeit zur ersten Übergabestation zurückgefördert und dort wieder von unten an die zu behandelnden Werkstücke herangeschwenkt, bis diese von der Schwenkeinrichtung gehalten werden.

Vorzugsweise ist die Schwenkachse im wesentlichen parallel zur Führungseinrichtung und auf derjenigen Seite der Führungseinrichtung sowie der Fahrwerke angeordnet, die den einen oder den mehreren Behandlungsbereichen abgewandt ist. Durch die entsprechende Anordnung der Schwenkachse können die Fahrwerke so in die Rückführposition verschwenkt werden, dass diese während der Rückführung nicht mit der Führungseinrichtung oder den Fahrwerken auf der Behandlungsstrecke in Kollision treten.

Im Rahmen der erfindungsgemäßen Modulbauweise können die Fahrwerke einen Drehantrieb an jedem Fahrwerk besitzen, der ausgangsseitig drehstarr mit dem inneren Rahmen der Fahrwerke verbunden ist.

Darüber hinaus können die Fahrwerke sowohl einen Fahrantrieb zur translatorischen Bewegung der Fahrwerke entlang der Behandlungsstrecke als auch einen Drehantrieb zur Drehbewegung des inneren Rahmens relativ zum äußeren Rahmen aufweisen, wobei die translatorische Bewegung unabhängig von der Drehbewegung ist. Derartige Fahrwerke als Teil des zweiten Moduls machen die gesamte Vorrichtung zu einer Taktanlage.

Schließlich können die Fahrwerke eine Einrichtung zum Anheben oder Absenken der Drehachse zum Drehen des inneren Rahmens relativ zum äußeren Rahmen aufweisen. Dies kann auf eine beliebige, dem Fachmann bekannte Weise, z. B. über eine Kniehebelführung, erfolgen. Auch ist es möglich, die Drehachse zu verschwenken, indem diese alternativ oder zusätzlich zum Anheben oder Absenken noch schräggestellt wird.

Bei der Verwendung von Fahrwerken mit einem eigenen Fahrantrieb und/oder Drehantrieb erfolgt die Informationsübertragung und/oder Energieübertragung vom ersten Modul auf die Fahrwerke vorzugsweise berührungslos, insbesondere induktiv. Diese Lösung ist gegenüber der alternativen Lösung unter Verwendung von Schleifkontakten störungsunanfälliger.

### Kurze Beschreibung der Zeichnungen

Nachfolgend wird die Erfindung beispielhaft anhand der beiliegenden Figuren beschrieben in denen:
- Fig. 1: eine Übersichtsdarstellung einer Vorrichtung im Bereich der zweiten Übergabestation ist;
- Fig. 2: eine Schnittansicht durch die Vorrichtung im Bereich eines Behandlungsbades ist, wobei der Schnitt senkrecht zur Translationsrichtung angeordnet ist.
- Fig. 3: zeigt eine Ausführungsform für ein Fahrwerk ohne eigenen Antrieb;
- Fig. 4: zeigt ein Fahrwerk mit eigenem Drehantrieb, jedoch ohne eigenen Fahrantrieb;
- Fig. 5: zeigt ein Fahrwerk, das sowohl einen eigenen Drehantrieb wie auch Fahrantrieb aufweist;
- Fig. 6: zeigt schematisch einen Teil der Vorrichtung im Bereich der zweiten Übergabestation mit Fahrwerken entsprechend der Ausführungsform nach Fig. 3;
- Fig. 7: zeigt schematisch die Bewegung von Fahrzeugkarosserien unter Verwendung eines Fahrwerks gemäß Fig. 3;
- Fig. 8: ist eine Ansicht ähnlich zur Fig. 7 und zeigt schematisch eine Vorrichtung mit Fahrwerken gemäß der Ausführungsform nach Fig. 3 im Bereich der Behandlungsbäder und der zweiten Übergabestation.
- Fig. 9: zeigt in einem Schnitt senkrecht zur Richtung der Translationsbewegung das Verschwenken der Fahrwerke im Bereich der ersten sowie zweiten Übergabestation;
- Fig. 10: zeigt einen Querschnitt durch den Tunnel der gesamten Anlage im Bereich einer Behandlungsstation, wobei wiederum Fahrwerke gemäß der Ausführungsform nach Fig. 3 eingesetzt werden;

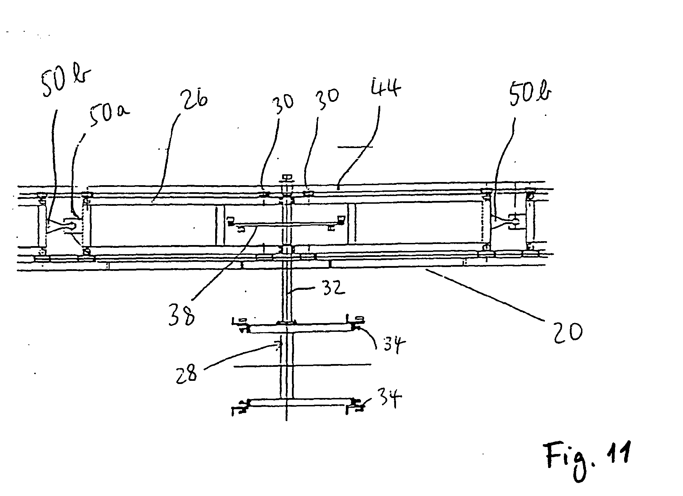

- Fig. 11: zeigt schematisch die Kopplungseinrichtungen zum miteinander koppeln der einzelnen Fahrwerke gemäß Fig. 3;
- Fig. 12: zeigt eine weitere Ausführungsform der Vorrichtung mit Fahrwerken gemäß Fig. 5, die sowohl einen eigenen Fahrantrieb wie auch eigenen Drehantrieb aufweisen;
- Fig. 13: zeigt eine Draufsicht auf einen derartigen Fahrantrieb mit eigenen Antriebseinheiten und
- Fig. 14: zeigt im Detail die Anordnung der Fahrantriebe bei der Ausführungsform nach Fig. 12 innerhalb der Anlage.

### Wege zur Ausführung der Erfindung

In den nachfolgenden Ausführungsformen der Erfindung werden jeweils dieselben Bauteile mit denselben Referenzziffern bezeichnet werden.

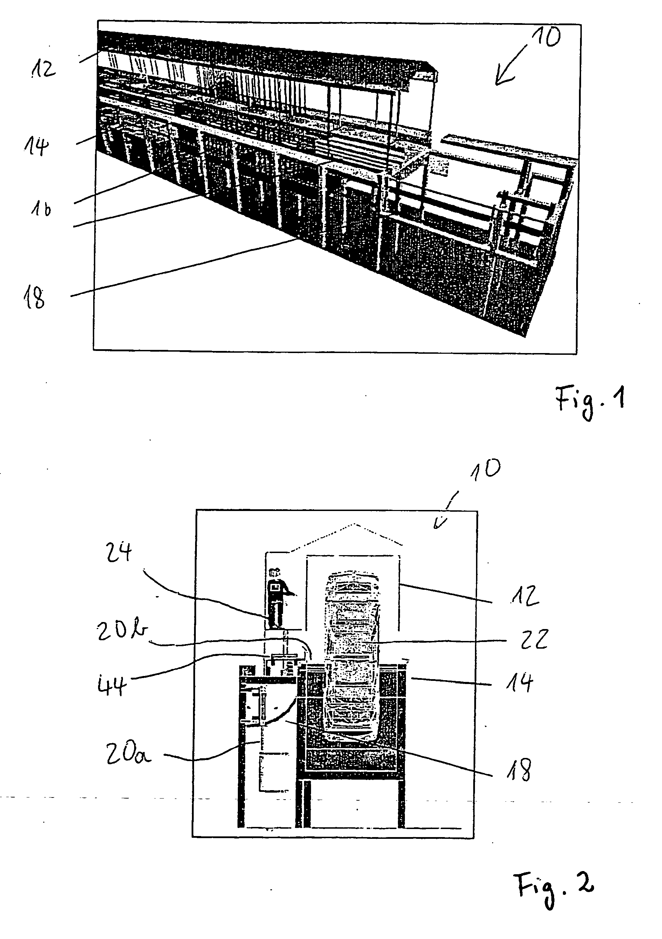

Fig. 1 zeigt eine schematische Ansicht einer Vorrichtung, die der Lackierung von Automobilkarosserien dient. Die Grundprinzipien der Vorrichtung sind aber auch auf andere Anlagen mit unterschiedlichen Behandlungsstationen zur Behandlung von Werkstücken in gleicher Weise anwendbar. Die gesamte Anlage 10, von der in Fig. 1 nur der ausgangsseitige Teil dargestellt ist, umfasst einen Tunnel 12 und eine Anzahl von Tanks 14, in denen sich eine Behandlungsflüssigkeit befindet und in die die zu behandelnden Werkstücke einzutauchen sind.

Neben Führungen 16 ist in Fig. 1 eine zweite Übergabestation 18 dargestellt, in welcher die Werkstücke, die durch eigene Fahrwerke (nicht dargestellt) gehalten die Anlage nach Fig. 1 in der Zeichenebene von links nach rechts durchlaufen haben, an eine nachgeschaltete Fördereinrichtung abgegeben werden.

Die in Fig. 1 dargestellten Hauptkomponenten der Anlage, wie Tunnel, Tanks und Führung mit Übergabestation sind Teile der modular aufgebauten Anlage, die bei allen nachfolgend diskutierten unterschiedlichen Konfigurationen der Gesamtanlage gemeinsam vorhanden sind und als erstes Modul bezeichnet werden. Es handelt sich somit gleichsam um die Basiskomponenten des nachfolgend eingehender beschriebenen Baukastensystems.

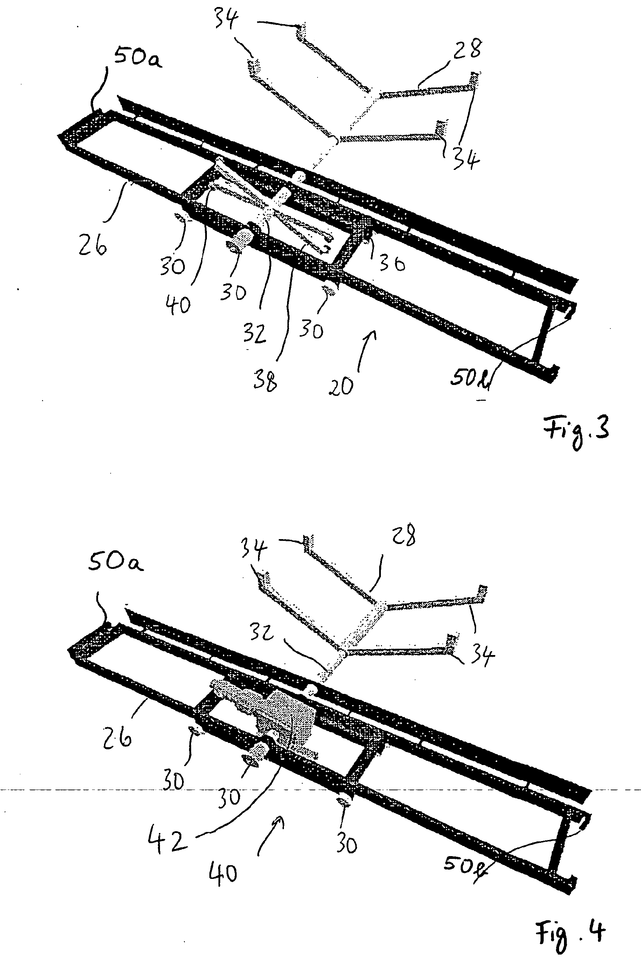

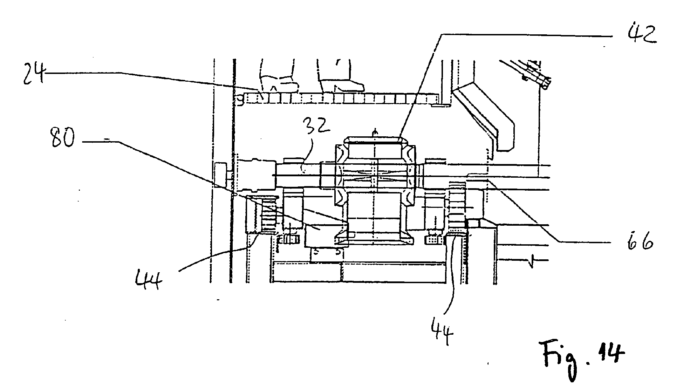

Die Fig. 2 zeigt schematisch einen Schnitt senkrecht zur Richtung der Translationsbewegung durch die Anlage und ebenfalls in schematischer Andeutung Tunnel 12, einen Behandlungstank 14 und die erste Übergangsstation 18. Die Darstellung nach Fig. 2 soll nur verdeutlichend das Eintauchen einer Fahrzeugkarosse 22 in den Tank 14 darstellen, während gleichzeitig die zweite Übergabestation 18 dargestellt ist entsprechend einem versetzten Schnitt, der einerseits die Übergabestation 18 zeigt andererseits aber durch einen Tank 14 hindurchführt. Im Bereich der Übergabestation ist ein Fahrwerk 20a dargestellt, das der später erläuterten Ausführungsform nach Fig. 3 ohne eigene Antriebsmittel entspricht und in eine Rückführungsposition nach unten verschwenkt ist. Gleichzeitig ist in Fig. 2 auch das Fahrwerk 20b dargestellt, das im Bereich der Behandlungsstrecke die Fahrzeugkarosse 22 hält. Im Bereich der Übergabestation wird, wie später anhand genauerer Darstellungen erläutert werden wird, das Fahrwerk von der Position entsprechend dem Fahrwerk 20b in die Position entsprechend dem Fahrwerk 20a um 90° um eine Schwenkachse nach unten geklappt, wobei gleichzeitig die behandelte Fahrzeugkarosse freigegeben wird und über eine Fördervorrichtung abtransportiert werden kann. Die Anordnung der Fahrwerke befindet sich unterhalb eines für Personal begehbaren Gitterrosts 24, wie später noch genauer aus der Fig. 14 ersichtlich ist.

Das in Fig. 1 dargestellte erste Modul kann im Rahmen des erfindungsgemäßen verfahrens im Rahmen der Systembauweise der Anlage aus verschiedenen Modulen mit einem zweiten Modul kombiniert werden, welches unterschiedlich ausgestaltete Fahrwerke umfasst.

In Fig. 3 ist ein Fahrwerk 20 dargestellt, wie es bereits in der Fig. 2 schematisch angedeutet wurde. Das Fahrwerk 20 weist einen äußeren Rahmen 26 auf sowie einen inneren Rahmen 28, der zur Halterung der zu behandelnden Fahrzeugkarossen gestaltet ist. Die Bezeichnungen "äußerer Rahmen" und "innerer Rahmen" sollen hierbei nicht dahingehend interpretiert werden, dass sich der innere Rahmen innerhalb des umgebenden äußeren Rahmens befindet. Vielmehr wurde in Bezug auf die in Fig. 1 dargestellte Anlage diese Bezeichnung dahingehend gewählt, dass der äußere Rahmen außerhalb des Bereichs der Behandlungseinrichtungen fährt, während der innere Rahmen die zu behandelnden Fahrzeugkarossen im Bereich der Behandlungstanks hält. Der äußere Rahmen 26 ist mit Rollen 30 versehen, die auf einer Führungseinrichtung abrollen und den äußeren Rahmen entlang der Führungseinrichtung jeweils in einer definierten Position zur Führungseinrichtung halten.

Der innere Rahmen 28 ist drehbeweglich relativ zum äußeren Rahmen 26 gestaltet, wobei der innere Rahmen um die Drehachse 32 relativ zum äußeren Rahmen bewegbar ist. Der innere Rahmen 28 weist zudem Halteansätze 34 auf, die in Fig. 3 nur schematisch dargestellt sind und dem Halten der zu bearbeitenden Werkstücke, im vorliegenden Ausführungsbeispiel Fahrzeugkarossen, dienen. Darüber hinaus ist der äußere Rahmen 26 mit Kopplungsansätzen (50a, 50b) versehen. Schließlich besitzt der äußere Rahmen eine Verbindungseinrichtung (nicht dargestellt), die zum Ankoppeln einer Zugeinrichtung oder Antriebseinrichtung zum Ziehen mehrerer miteinander verbundener äußerer Rahmen ähnlich einem Eisenbahnzug mit mehreren Waggons dient.

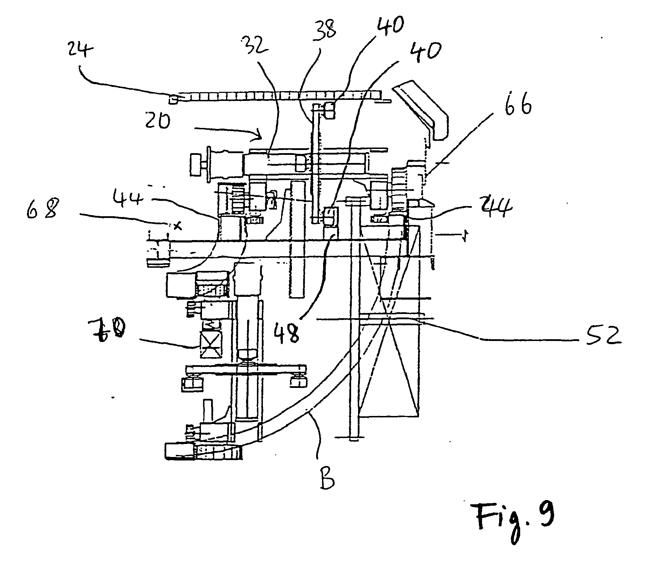

Das Fahrwerk ohne eigenen Fahrantrieb oder Drehantrieb gemäß Fig. 3 weist eine Hebelanordnung 38 mit mehreren Hebelarmen und an den Enden der Hebelarme angeordneten Rollen 40 auf, die mit einer Leitschiene mit geneigten Leitabschnitten zusammenwirken, um eine gesteuerte und jederzeit kontrollierte Drehung des inneren Rahmens 28 relativ zum äußeren Rahmen 26 zu bewirken. Zu diesem Zweck rollen die Rollen 40 an den Hebeln der Hebelanordnung 38 in der in Fig. 9 dargestellten Leitschiene 48 ab. Bei den auf- bzw. abwärtsgeneigten Abschnitten der Leitschiene wird dabei der innere Rahmen 28 um die Drehachse 32 herum relativ zum äußeren Rahmen 26 verschwenkt. Durch die Formgebung der Leitabschnitte der Leitschiene bzw. Steuerungsführungsschiene lassen sich somit gewünschte vollständige und teilweise Drehungen in jeweils nur einer oder wechselnden Drehrichtungen verwirklichen.

Die Leitschiene 48 bildet gemeinsam mit dem in Fig. 3 dargestellten Fahrwerk 20 sowie den Kopplungseinrichtungen 50a, 50b zwischen einzelnen Fahrwerken und einer Zugeinrichtung im Bereich der zweiten Übergabestation zum Ziehen der miteinanderverbundenen äußeren Rahmen das zweite Modul der gesamten Anlage, die mit dem Basissystem der Anlage als Systembaustein kombiniert werden kann. Bei der Verwendung eines Fahrwerks nach Fig. 3 lässt sich die gesamte Anlage als eine kontinuierlich fördernde Anlage ausgestalten.

Bei der Ausführungsform nach Fig. 4 wird ein Fahrwerk 40 eingesetzt, das sich vom Fahrwerk 20 nur im Bereich einer einzigen Komponente unterscheidet. Der Unterschied liegt darin, dass anstelle der Hebelanordnung 38 die Drehung um die Drehachse 32 durch einen Drehantrieb 42 bewirkt wird. Die übrigen Elemente entsprechen denjenigen nach Fig. 3, so dass auf die obigen Ausführungen verwiesen werden kann. Das Fahrwerk nach Fig. 4 wird im wesentlichen mit denselben Bauteilen des zweiten Moduls, wie oben im Zusammenhang mit dem Fahrwerk 20 beschrieben wurde, in der gesamten Anlage 10 eingesetzt. Allerdings ist bei dem Fahrwerk 40 nach Fig. 4 keine Leitschiene mit geneigten Leitabschnitten vorzusehen, die bei der Ausführungsform nach Fig. 3 mit der Hebelanordnung zusammenwirkte.

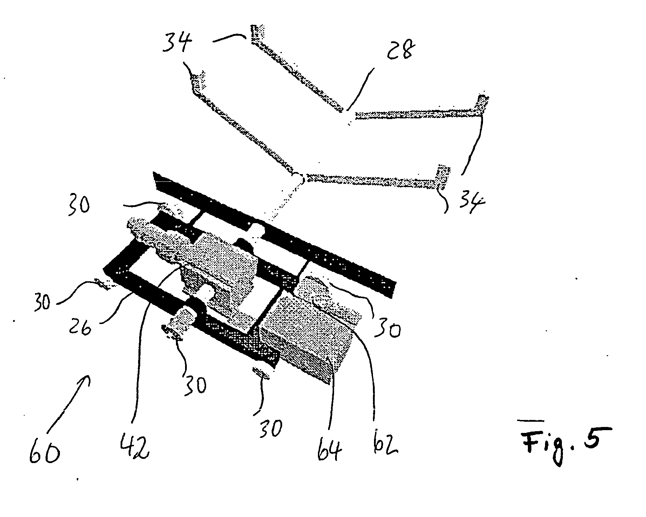

Fig. 5 zeigt eine dritte alternative Ausführungsform eines Fahrwerks, bei dem der innere Rahmen 28 wieder dem inneren Rahmen nach den Ausführungsformen nach Fig. 2 und 4 entspricht. Der äußere Rahmen ist jedoch deutlich kleiner bemessen als bei den Ausführungsformen nach Fig. 3 und 4 und weist wiederum Fahrrollen 30 zum Zusammenwirken mit der Führungseinrichtung (nicht dargestellt) auf. Der wesentliche Unterschied zwischen dem Fahrwerk 60 nach Fig. 5 und dem Fahrwerk 40 nach Fig. 4 besteht darin, dass nicht nur der Drehantrieb 42, sondern noch ein zusätzlicher Fahrantrieb 62 vorgesehen ist, der, wie auch der Drehantrieb 42, über eine mitfahrende Steuerung 64 gesteuert wird.

Bei der Verwendung eines Fahrwerks 60 gemäß Fig. 5 sind weder Leitschienen zur Steuerung der Drehbewegung noch Kopplungseinrichtungen zwischen den äußeren Rahmen 26, noch Verbindungseinrichtungen oder ein Rückführförderer noch eine Führungseinrichtung zum Ziehen einer Reihe von aneinander gekoppelten Fahrwerken vorzusehen, da die Fahrwerke sowohl in Bezug auf die auszuführenden Drehbewegungen unabhängig von der Translationsbewegung sind als auch unabhängig in Bezug auf die Translationsbewegungen der anderen Fahrwerke sind. Solange die verschiedenen hintereinander den Behandlungsbereich durchlaufenden Fahrwerke somit nicht miteinander kollidieren, sind beliebige Translations- und Drehbewegungen bei dem Fahrwerk 60 nach Fig. 5 möglich, während bei dem Fahrwerk 40 nach Fig. 4 die Translationsbewegung der einzelnen Fahrwerke miteinander gekoppelt ist und nur die Drehbewegung hiervon unabhängig ausgeführt werden kann. Bei dem Fahrwerk 20 nach Fig. 3 schließlich sind die Translationsbewegungen der hintereinander die Behandlungsstrecke durchlaufenden Fahrwerke starr miteinander gekoppelt und zudem die Drehbewegung jedes Fahrwerks an die Translationsbewegung gekoppelt.

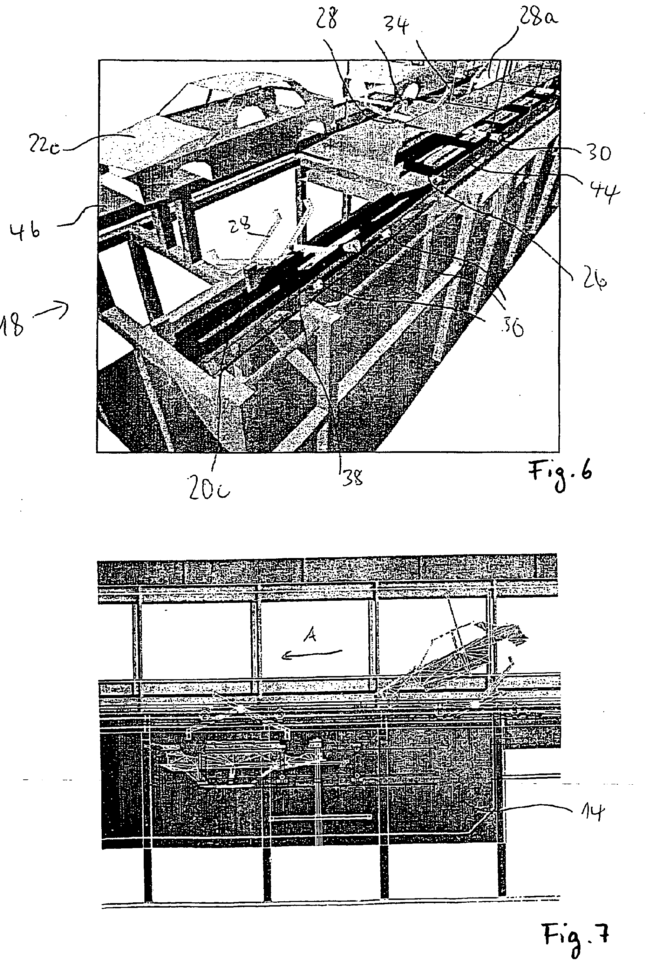

Fig. 6 zeigt schematisch die zweite Übergabestation 18 bei Verwendung von Fahrwerken 20 nach Fig. 3. Die in der Zeichenebene von rechts nach links geförderten Fahrzeugkarossen 22 werden auf den Halteeinrichtungen der inneren Rahmen 28 gehalten und die äußeren Rahmen 26 verlaufen mit den Rollen 30 entlang von Führungsschienen 44, während die Hebelanordnung 38 die Drehbewegung der inneren Rahmen steuert. So ist am oberen rechten Bildrand ein innerer Rahmen 28a zu sehen, der gerade verschwenkt ist und eine Fahrzeugkarosse in ein Behandlungsbad taucht.

Im Bereich der Übergabestation 18 wird, wie anhand des Fahrwerks 20c dargestellt ist, das Fahrwerk nach unten weggeklappt und gibt dabei die von dem Fahrwerk gehaltene Fahrzeugkarosse 22c frei. Gleichzeitig wird die Fahrzeugkarosse über eine zweite Fördereinrichtung abtransportiert.

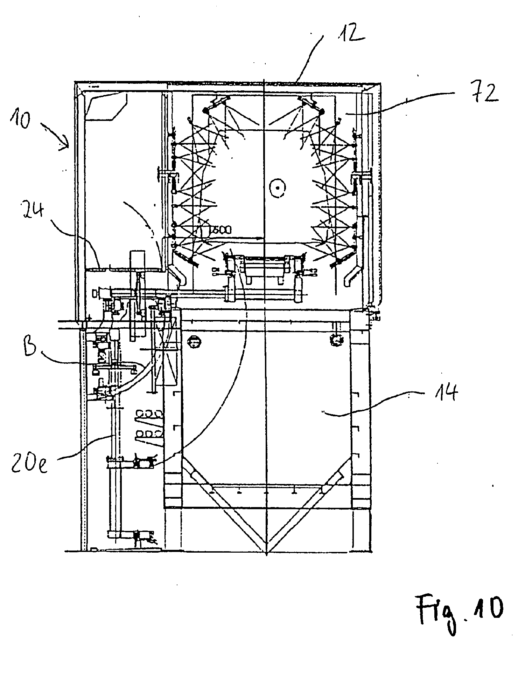

Das Verschwenken der Fahrwerke wird anhand der Fig. 9 und 10 noch deutlicher gezeigt.

Fig. 7 zeigt die Bewegung der Fahrwerke mit der durch die Fahrwerke gehaltenen Fahrzeugkarosse in und durch einen Tank 14. Dabei werden in Bewegungsrichtung A die Fahrwerke 20 translatorisch bewegt und über die anhand der Fig. 3 erläuterten Hebelanordnungen, die mit einer Leitschiene zusammenwirken, der innere Rahmen relativ zum äußeren Rahmen bewegt. Die Fahrzeugkarossen tauchen bei dem in Fig. 7 dargestellten Beispiel über Kopf, d.h. mit der Motorhaube zuerst, in den Tank 14 ein und werden in einer Überkopfstellung durch den Tank hindurch transportiert. Das Transportieren der Fahrzeugkarossen über Kopf durch den Tank 14 besitzt den Vorteil, dass es zu keiner Sedimentation auf Sichtflächen kommt und zudem eine gute Hohlraumflutung stattfindet.

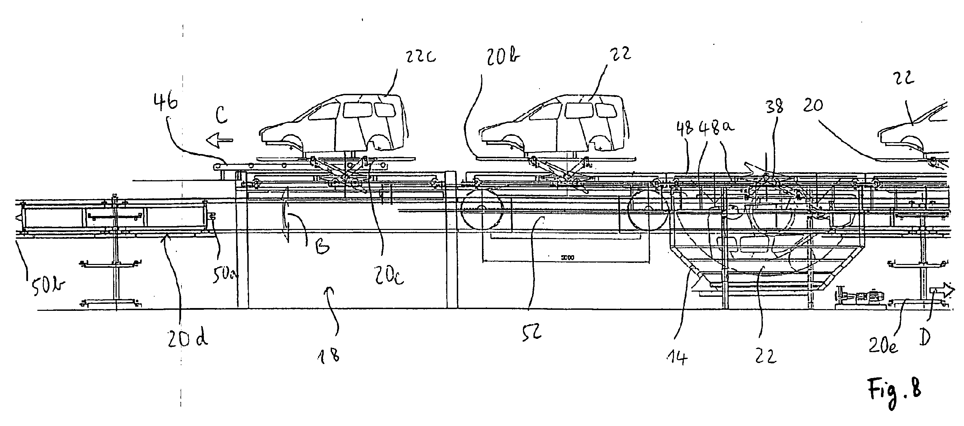

Fig. 8 zeigt schematisch die Abfolge verschiedener Behandlungsstationen der Anlage mit Fahrwerken 20 gemäß der Ausführungsform nach Fig. 2, 3, 6 und 7. Die einzelnen Fahrzeugkarossen 22 werden jeweils auf einem Fahrwerk 20 gehalten, wobei im Bereich des Tanks 14 durch die Hebelanordnung 38 und das Zusammenwirken mit einer Leitschiene 48 mit geneigten Leitabschnitten 48a die Drehbewegung erfolgt. Darüber hinaus ist die Übergabestation 18 dargestellt, die eine Schwenkeinrichtung aufweist, um in Richtung B die Fahrwerke 20 um 90° nach unten zu verschwenken, wie anhand des Fahrwerks 20d auf der linken Seite der Zeichenebene dargestellt ist. Im Bereich der Übergabestation 18 beim Herunterschwenken des Fahrwerks 20 muss natürlich sichergestellt werden, dass die behandelte Fahrzeugkarosse 22c von einer Fördereinrichtung 26 aufgenommen wird, die in Fig. 8 schematisch dargestellt ist. Die Fördereinrichtung kann so gestaltet sein, dass sie sich zwischen den einzelnen Armen des inneren Rahmens befindet und beim Nachuntenschwenken des Fahrwerks gleichsam die Fahrzeugkarosse auf der Fördereinrichtung 48 abgesetzt und in Pfeilrichtung C aus der Anlage heraustransportiert wird.

Bei der in Fig. 8 dargestellten Ausführungsform besitzen die einzelnen Fahrwerke keinen eigenen Drehantrieb oder Fahrantrieb, so dass diese unter Verwendung einer Pull-Technik durch die gesamte Anlage gezogen werden. Hierbei sind die einzelnen Fahrwerke 20 mit Kopplungsansätzen versehen, wobei jedes Fahrwerk 20 einen Kopplungsansatz 50a und einen Kopplungsansatz 50b auf der entgegengesetzten Seite besitzt. Die einzelnen Fahrwerke werden durch die Anlage so geführt, dass die korrespondierend geformten Kopplungsansätze 50a und 50b formschlüssig ineinander greifen und somit die einzelnen Fahrwerke 20 gleichsam wie in einem Zug von demjenigen Fahrwerk 20c gezogen werden können, das sich jeweils am nächsten zur Übergabeeinrichtung 19 befindet, bevor das Fahrwerk dort durch die Schwenkbewegung B nach unten aus dem formschlüssigen Eingriff mit dem in Bewegungsrichtung dahinter angeordneten Fahrwerk 20b tritt. Die Kopplungseinrichtungen können auch die in Fig. 3 dargestellte Hakenform aufweisen. Nach dem Abschwenken des Fahrwerks in der Übergabestation 18 wird dieses von Gurtförderern gegriffen und in Bewegungsrichtung D zurückgeführt. Ein Fahrwerk während der Rückführung ist mit 20e in Fig. 8 bezeichnet.

Wenn ein Fahrwerk in der Übergabestation 18 nach unten abgeklappt worden ist, muss mit Hilfe eines Antriebs 52 oder mit Hilfe einer anderen Zieheinrichtung das nunmehr am nächsten zur Übergabestation 18 angeordnete Fahrwerk 20b und die an diesem Fahrwerk angekoppelten übrigen Fahrwerke in der Richtung C der translatorischen Bewegung zur Übergabestation 18 gefördert werden, bevor im nachfolgenden Schritt das Fahrwerk 20b nach unten abklappt und das unmittelbar nachfolgende Fahrwerk, das zu diesem Zeitpunkt im Bereich des Antriebs 52 angeordnet ist, wiederum in Art einer Lokomotive die übrigen daran angekoppelten Fahrwerke in Pfeilrichtung C weiterfördert. In gleicher Weise wird an der Übergabestation am Beginn der Behandlungsstrecke ein "neues" Fahrwerk wieder in die Kette der in der Behandlungsstrecke angeordneten Fahrwerke über die Schwenkbewegung nach oben eingehakt.

Der in Fig. 8 in Bewegungsrichtung vor der Übergabestation 18 angeordnete Bereich mit dem Fahrwerk 20d ist ein Wartungsplatz, der für das Betriebspersonal einen einfachen Zugang zu den Fahrwerken für Wartungs- und Reparaturarbeiten erlaubt.

In Fig. 9 ist das Herunterklappen eines Fahrwerks dargestellt. Unter dem bereits oben beschriebenen Gitterrost 24, der gleichzeitig als Wartungszugang dient, ist das Fahrwerk 20 mit der Hebelanordnung 38 auf den Führungsschienen 44 geführt. Auf der den Behandlungsstationen zugewandten Seite ist eine durchgängige Abschottung 66 angeordnet. In der Übergabestation 18 wird das gesamte Fahrwerk 20, wie bereits in Fig. 8 dargestellt wurde, um eine Schwenkachse 68 um ca. 90° nach unten verschwenkt, wie durch die Schwenkradien B angedeutet ist. Die Schwenkachse verläuft parallel zur Translationsrichtung C der Fahrwerke und ist auf der den Behandlungseinrichtungen abgewandten Seite der Fahrwerke angeordnet, so dass die nach unten geklappten Fahrwerke nicht in Kollision mit den Fahrwerken im Bereich der Behandlungsstrecke treten können. Beim Herunterklappen wird nicht nur das Fahrwerk alleine, sondern werden auch die Führungsschienen im Bereich der Übergabestation 18 mit nach unten verschwenkt, so dass das Fahrwerk auch während des Verschwenkens nach unten exakt geführt wird. Nach dem Verschwenken nach unten wird das Fahrwerk durch den Gurtförderer 70 schnell an die zu Beginn der Anlage angeordnete, weitere Übergabestation transportiert, in der der umgekehrte Bewegungsablauf B stattfindet und das Fahrwerk nach oben verschwenkt wird. Fig. 9 könnte somit in gleicher Weise die Übergabeeinrichtung am Beginn der Behandlungsstrecke darstellen, da in Bezug auf die Bewegungsabläufe kein Unterschied zwischen den beiden Übergabestationen besteht, außer dass eine feste Verbindung zu der zu behandelnden Fahrzeugkarosse in der ersten Übergabeeinrichtung hergestellt und in der zweiten Übergabeeinrichtung entsprechend wieder gelöst werden muss.

Fig. 10 zeigt denselben Sachverhalt noch einmal, wobei hier eine Behandlungsstation 72 dargestellt ist, die eine Sprühbehandlung bewirkt und selbstverständlich alternativ zu den bislang in der ausführlichen Beschreibung bevorzugter Ausführungsformen verwendeten Tauchbädern ebenfalls innerhalb des Tunnels 12 der Anlage angeordnet werden kann. Aus der Darstellung nach Fig. 10 wird deutlich, dass durch das Herunterklappen der Fahrwerke in die mit 20e dargestellte Position der vorhandene Raum in bestmöglicher Weise ausgenützt wird, weil die Fahrwerke beim Rücktransport neben einem eventuellen Tank 14 entlang geführt werden können und somit der vorhandene Raum in bestmöglicher Weise ausgenützt wird.

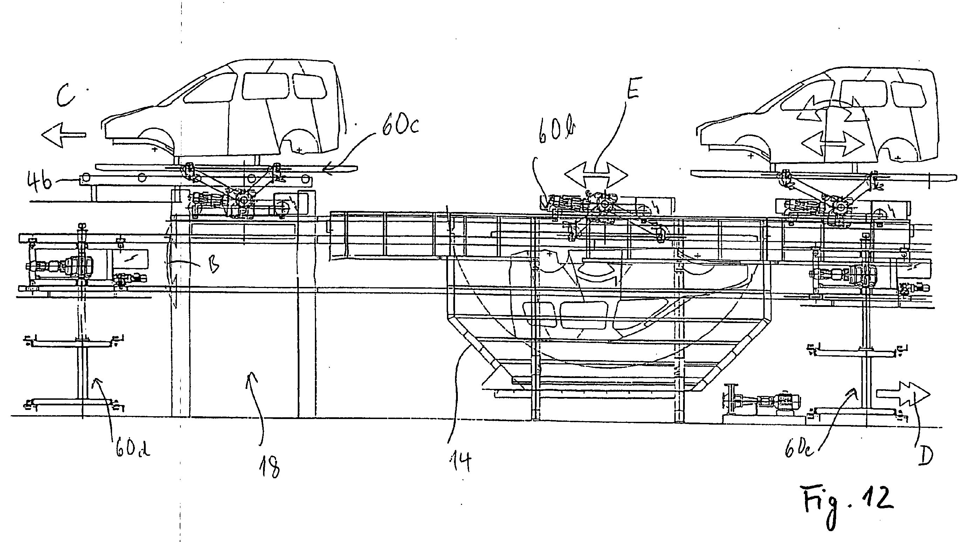

Fig. 12 zeigt eine alternative Ausführungsform der Vorrichtung unter Verwendung eines Fahrwerks 60. Die Darstellung entspricht im wesentlichen derjenigen nach Fig. 8, doch muss aufgrund des Vorsehens von Fahrwerken 60 mit einem eigenen Fahrantrieb sowie einem eigenen Drehantrieb keine Leitschiene mit geneigten Abschnitten 48a vorgesehen werden. Darüber hinaus sind die Fahrwerke 60 kleiner ausgestaltet und besitzen auch keine Kopplungsansätze 50. Schließlich kann der Antrieb zum Ziehen eines am weitesten nahe der Übergabestation 18 angeordneten Fahrwerks entfallen. In Übereinstimmung mit der Bezeichnung nach Fig. 8 wird mit 60c dasjenige Fahrwerk bezeichnet, dass sich im Bereich der Übergabestation befindet und mit Referenzziffer 60b das Fahrwerk, dass sich in Richtung C der translatorischen Bewegung hinter dem Fahrwerk 60c befindet. Das Fahrwerk 60d befindet sich auf einem Wartungsplatz, während das Fahrwerk 60e in Pfeilrichtung D schnell zurück transportiert wird. Aufgrund der unabhängigen Fahr- sowie Drehantriebe lässt sich die Fahrrichtung bereichsweise auch umkehren, wie anhand des Pfeils E angedeutet ist. Es kann somit innerhalb eines Behandlungsbereichs und insbesondere im Bereich eines Tanks 14 eine beliebige Bewegung der Fahrwerke durchgeführt werden. Die Übergabe an den Übergabestationen erfolgt in der oben beschriebenen Weise unter Verwendung der Fahrwerke 20.

Die Informations- sowie Energieübertragung zwischen der Führungseinrichtung als Teil des ersten Moduls und den Fahrwerken 60 erfolgt vorzugsweise über eine induktive Stromübertragung 80, wie aus Fig. 14 ersichtlich ist. Es wird somit deutlich, dass sich die Anlage gemäß der Ausführungsform nach Fig. 8 auf recht einfache Weise in die Anlage nach Fig. 12 umrüsten lässt, indem hauptsächlich unterschiedliche Fahrantriebe eingesetzt werden und die oben beschriebenen, zusätzlichen Anpassungsmaßnahmen durchgeführt werden.

In gleicher Weise ist natürlich auch eine der oben im Detail beschriebenen Hybrid-Lösungen denkbar, bei denen die Fahrwerke nur einen einzigen Antrieb besitzen, wie in Fig. 4 als Beispiel gezeigt wurde. Die Rollenbahn 46 zum Abfördern der behandelnden Fahrzeugkarossen, die Schwenkeinrichtung für die Fahrwerke und der schnelle Rücklauf unter Verwendung von Gurtförderern entspricht bei einer Hybrid-Lösung denjenigen der bereits oben beschriebenen Ausführungsformen.

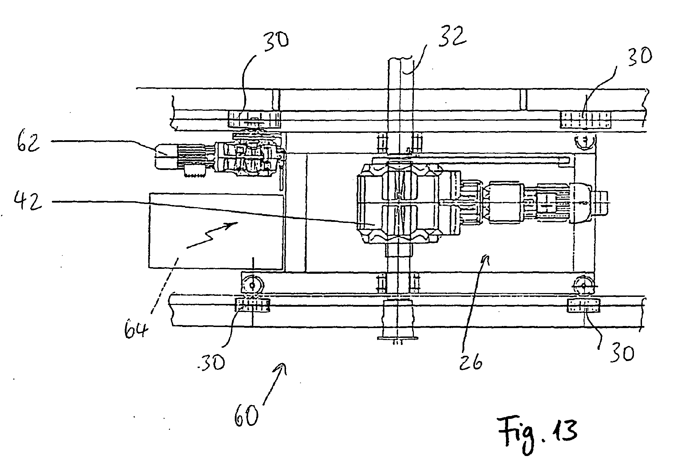

Fig. 13 zeigt noch einmal eine Draufsicht auf einen Fahrantrieb 60 der sowohl einen Fahrantrieb 62 als auch einen Drehantrieb 42 und eine mitfahrende Steuerung 64 aufweist. Der innere Rahmen 28 ist bei der Ausführungsform nach Fig. 13 nicht mehr dargestellt; die Abbildung endet mit der Drehachse 32.

Die Vorteile der erfindungsgemäß umgerüsteten Anlage bestehen in der Austauschbarkeit der Systembausteine (erstes Modul und zweites Modul) unter Beibehaltung des Basissystems als erstem Modul mit den Basiskomponenten Tunnel, Tanks und Führung mit Übergabestationen. Die Anlage besitzt einen geringen Flächenbedarf, da kein Platzverlust unter der Anlage stattfindet und durch die geringeren Abmessungen lassen sich auch Einsparungen beim Stahlbau verwirklichen. Zusätzlich lassen sich Lager und Gelenke außerhalb der Tauchmedien anordnen und durch mitgeführte Dichtungen eine optimale Wellenabdichtung verwirklichen. Die Anlage kann mit geringen Umrüstarbeiten in Form der in Fig. 12 dargestellten elektronischen Variante mit einer Einzelansteuerung der Fahrwerke, mit gesondertem Fahr- und Drehantrieb und einer maximalen Flexibilität der Bewegung der einzelnen Fahrwerke ausgestattet werden. Alternativ kann auch die Ausführungsform nach Fig. 8 mit starr miteinander verketteten Fahrwerken verwirklicht werden, wobei eine maximale Zuverlässigkeit und ein höchster Durchsatz erzielbar sind. Gegenüber den herkömmlichen Lösungen mit umlaufend verketteten Fahrwerken lässt sich durch die schnelle Rückführung jedoch ebenfalls bereits der Vorteil eines geringeren Einsatzes von Fahrwerken erzielen. Auch entfällt das Kettenspannen. Zwischen den beiden genannten Lösungen sind jedoch auch Hybrid-Lösungen denkbar, bei denen zum Beispiel die Fahrwerke miteinander verkettet sind und nur die Drehmotoren einzeln angesteuert werden. Eine derartige Hybrid-Lösung kann einen hohen Durchsatz bei gleichzeitig hoher Flexibilität verwirklichen. Insbesondere die Lösungen mit einem gesonderten Drehantrieb besitzen den Vorteil, dass die Karosserien im Becken leicht hin- und hergeschwenkt werden und in einem frei wählbaren Winkel über dem Becken abtropfen können. Die Lösungen mit einem zusätzlich vorhandenen eigenen Fahrantrieb besitzen den zusätzlichen Vorteil, dass die Karosserien mit hoher Geschwindigkeit zum Tauchbecken transportiert werden können, während die Bearbeitungszeit im Tauchbecken oder in einer anderen Behandlungseinrichtung bei gleichbleibender Verweildauer der Karosserien in der gesamten Behandlungsstrecke verringert werden kann. Der Hauptvorteil liegt aber in der hohen Flexibilität der Vorrichtung, die sich über gemeinsame Bauteile für die verschiedenen kundenspezifischen Konzepte kostengünstiger herstellen lässt und zudem für zukünftige Produktionsänderungen oder Neukonfigurierungen der Anlage Raum bietet. Die spezielle Rückführung der Fahrwerke minimiert zudem den Platzbedarf der gesamten Vorrichtung.

## Patentansprüche

1. Verfahren zur Umrüstung einer Vorrichtung zur Tauch-Oberflächenbehandlung von Werkstücken (22), insbesondere Fahrzeugkarossen (22), in Modulbauweise, mit
- einem ersten Modul, umfassend:
- eine Behandlungsstrecke (12) mit einem oder mehreren Behandlungsbereichen (14) zur Tauch-Oberflächenbehandlung der Werkstücke (22); und
- eine Führungseinrichtung (44) entlang der Behandlungsstrecke (12), die nur auf einer Seite der Behandlungsstrecke (12) angeordnet ist; sowie
- einem zweiten Modul, umfassend ein oder mehrere Fahrwerke (20; 40; 60), an denen die Werkstücke (22) befestigbar sind und die entlang der Führungseinrichtung (44) bewegbar sind; wobei (erste Fahrwerke (20), die keine Antriebsmotoren besitzen, und zweite Fahrwerke (40; 60), die einen Fahrantrieb (62) oder Drehantrieb (42) besitzen,) vergesehen sind;
**gekennzeichnet durch** den Schritt : Austanschen der ersten Fahrwerke (20) und zweiten Fahrwerke (40;60) unter Beibehaltung des ersten Moduls als Basissystem.

2. Verfahren nach Patentanspruch 1, bei welcher die Fahrwerke (20; 40; 60) Rollen (30) aufweisen, die an der mindestens einen Schiene (44) der Führungseinrichtung abrollen.

3. Verfahren nach einem der vorhergehenden Patentansprüche, bei welcher das erste Modul weiter umfasst:
- eine erste Übergabestation (18), die mit einer ersten Fördereinrichtung zur Zufuhr der zu behandelnden Werkstücke (22) zusammenwirkt; und
- eine zweite Übergabestation (18), die mit einer zweiten Fördereinrichtung (46) zum Abtransport der behandelten Werkstücke (22) zusammenwirkt.

4. Verfahren nach Patentanspruch 3, bei welcher das erste Modul weiter umfasst:
- eine Rückführeinrichtung, vorzugsweise in Form eines Gurtförderers (70) oder Kettenförderers, zur Förderung der Fahrwerke von der zweiten Übergabestation (18) zur ersten Übergabestation (18) .

5. Verfahren nach Patentanspruch 4, bei welcher die Rückführeinrichtung (70) eine Weicheneinrichtung zum Ein- oder Ausschleusen von Fahrwerken zu bzw. von einem Wartungsbereich aufweist.

## Claims

1. Method for the conversion of an apparatus for the surface treatment by dipping of work pieces (22), in particular vehicle bodies (22), of modular construction, having
- a first module, including:
- a treatment zone (12) having one or more treatment regions (14) for surface treatment of the work pieces (22) by dipping; and
- a guide device (44) along the treatment zone (12), which is arranged on only one side of the treatment zone (12); and
- a second module, including one or more chassis units (20; 40; 60) to which the work pieces (22) can be attached and which are movable along the guide device (44); first chassis units (20) which have no drive motors and second chassis units (40; 60) which have a traction drive (62) or rotary drive (42) being provided;
**characterised by** the step of:
- exchanging the first chassis units (20) and second chassis units (40; 60) while retaining the first module as the basic system.

2. Method according to claim 1, in which the chassis units (20; 40; 60) comprise rollers (30) which roll over the at least one rail (44) of the guide device.

3. Method according to any of the preceding claims, in which the first module further includes:
- a first transfer station (18) which co-operates with a first conveying device for delivery of the work pieces (22) to be treated; and
- a second transfer station (18) which co-operates with a second conveying device (46) for removing the treated work pieces (22).

4. Method according to claim 3, in which the first module further includes:
- a return device, preferably in the form of a belt conveyor (70) or chain conveyor, for conveying the chassis units from the second transfer station (18) to the first transfer station (18).

5. Method according to claim 4, in which the return device (70) comprises a switch device for inward or outward transfer of chassis units to and from a maintenance region.

## Revendications

1. Procédé de conversion d'un dispositif pour le traitement de surface par immersion de pièces d'oeuvre (22), en particulier de carrosseries de véhicules (22), en un mode de réalisation construction modulaire, comportant :
- un premier module, comprenant :
- une voie de traitement (12), avec une ou plusieurs zones de traitement (14), pour le traitement de surface par immersion des pièces d'oeuvre (22) ; et
- un dispositif de guidage (44) installé le long de la voie de traitement (12), disposé sur un seul côté de la voie de traitement (12) ; ainsi qu'
- un deuxième module, comprenant un ou plusieurs chariots (20 ; 40 ; 60), auxquels sont susceptibles d'être fixées les pièces d'oeuvre (22) et qui sont susceptibles d'être déplacés le long du dispositif de guidage (14) ; où sont prévus des premiers chariots (20), ne comprenant aucun moteur d'entraînement, et des deuxièmes chariots (40 ; 60), comprenant un dispositif d'entraînement en translation (62) ou un dispositif d'entraînement en rotation (42) ;
**caractérisé par** l'étape d' :
échange des premiers chariots (20) et des deuxièmes chariots (40 ; 60), en conservant le premier module en tant que système de base.

2. Procédé selon la revendication 1, dans lequel les chariots (20 ; 40 ; 60) présentent des galets (30), roulant sur le au moins un rail (44) du dispositif de guidage.

3. Procédé selon l'une des revendications précédentes, dans lequel le premier module comprend en outre :
- un premier poste de transfert (18), coopérant avec un premier dispositif de transport, pour l'amenée des pièces d'oeuvre (22) à traiter ; et
- un deuxième poste de transfert (18), coopérant avec un deuxième dispositif de transport (46), pour le transport d'évacuation des pièces d'oeuvre (22) traitées.

4. Procédé selon la revendication 3, dans lequel le premier module comprend en outre :
- un dispositif de recirculation, de préférence se présentant sous forme d'un transporteur à courroie (70), ou d'un transporteur à chaîne, pour transporter les chariots, du deuxième poste de transfert (18) au premier poste de transfert (18).

5. Procédé selon la revendication 4, dans lequel le dispositif de recirculation (70) présente un dispositif d'aiguillage, pour mettre en circuit ou mettre hors circuit des chariots, en les plaçant dans, ou en les extrayant hors, d'une zone d'entretien.
